# EUROPÄISCHE PATENTSCHRIFT

(11) **EP 3 051 294 B1**
(45) Veröffentlichungstag und Bekanntmachung des Hinweises auf die Patenterteilung: **11.07.2018**
(21) Anmeldenummer: 16151817.0
(22) Anmeldetag: 19.01.2016
(51) Int. Cl.: G01P 5/00, G01J 5/00, G01P 13/02

(54) **IR-BASIERTE GESCHWINDIGKEITSFELDBESTIMMUNG**
IR BASED VELOCITY FIELD DETERMINATION
DETERMINATION DE CHAMP DE VITESSE BASEE SUR IR

(30) Priorität: 27.01.2015 DE 102015201337
(43) Veröffentlichungstag der Anmeldung: 03.08.2016
(73) Patentinhaber: Deutsches Zentrum für Luft- und Raumfahrt, 51147 Köln (DE)
(72) Erfinder: TIDDENS, Arne, 50858 Köln (DE); RÖGER, Marc, 74182 Obersulm (DE)
(74) Vertreter: dompatent von Kreisler Selting Werner - Partnerschaft von Patent- und Rechtsanwälten mbB

(56) Entgegenhaltungen:
- WO-A1-2012/151411
- US-A- 5 127 264
- US-A- 5 200 621

## Beschreibung

Die vorliegende Erfindung betrifft ein Verfahren zur Bestimmung eines Geschwindigkeitsfeldes eines strömenden Fluides, insbesondere eines Gases oder Gasgemisches, unter Einsatz eines IR-aktiven Gases. Weiterhin betrifft die vorliegende Anmeldung die Verwendung eines IR-aktiven Gases zur Bestimmung eines Geschwindigkeitsfelds.

Die Bestimmung von Geschwindigkeitsfeldern von Fluidströmen, insbesondere von Gasströmen oder Strömungen von Gasgemischen, ist eine häufig vorkommende Fragestellung in Ingenieurswissenschaften. Beispiele hierfür sind die Ausströmungen von heißen Abgasen oder Gasen beispielsweise aus Verbrennungsmotoren in die Umwelt, Untersuchungen von Verdünnungseffekten oder Untersuchungen von Frei-, Wand- oder Prallstrahlen.

Dabei sind die Messverfahren häufig dadurch limitiert, an welcher Stelle das Geschwindigkeitsfeld gemessen wird.

Die Strömungsverhältnisse durch rezirkulierte, als heiße, ausströmende Luft an Solartürmen, wie sie bei der Herstellung von Solarenergie, beispielsweise im Solarturm Jülich, verwendet werden, stellt hier eine besondere Herausforderung da. Insbesondere die Störmungsverhältnisse am offenen volumetrischen Receiver ist auf Grund der Größe des Turms, der Dimensionen des Receivers und damit verbunden dessen schlechte Zugänglichkeit sowie dem Vorhandensein konzentrierter Solarstrahlung eine schwierige Messumgebung.

Im Stand der Technik sind unterschiedliche Messtechniken beschrieben, mit welchen Strömungsverhalten untersucht werden können. So offenbart EP 0 930 506 A1 ein Verfahren zur quantitativen Erfassung von Strömungsvorgängen in Fluidströmungen, bei dem mit der Strömung mitgeführte Partikel bewegt werden. Mit Hilfe eines Laserlichts wird die Bewegung der Partikel analysiert.

In US 2014/0149055 A1 wird ein Verfahren zur Darstellung von Strömungen beschreiben, welches auf "particle image velocimetry" basiert. Particle image velocimetry (PIV) ist ein berühungsloses optisches Verfahren zur Bestimmung von Geschwindigkeitsfeldern in der Strömungsmechanik. In kurzem zeitlichen Abstand werden Partikel im Fluid fotografiert. Aus den Partikelpositionen auf den Bildern kann die Bewegungsrichtung und -geschwindigkeit näherungsweise gemittelt werden.

Zur Bestimmung von Geschwindigkeitsfeldern ist beispielsweise auch die "magnetic resonance velocimetry" (MRV) bekannt. Hierbei handelt es sich um ein experimentelles Verfahren zur Bestimmung von Geschwindigkeitsfeldern, welches auf dem Phänomen der Kernspinresonanz basiert und adaptiert ist an die Magnetresonanztomographie der medizinischen Diagnostik. Die Geschwindigkeiten werden üblicherweise mittels Phasenkontrasttomographie bestimmt. Hierbei werden die Geschwindigkeiten aus den Phasenunterschieden in den Bilddaten berechnet, die wiederrum unter Verwendung spezieller Gradientenverfahren erzeugt werden. Für die MRV können herkömmliche Magnetresonanztomographen verwendet werden.

Ein weiteres bekanntes Verfahren ist die Laser-Doppler-Anemometrie (LDA). Dieses ermöglicht die punktuelle Bestimmung von Geschwindigkeitskomponenten in Fluidströmungen. Hierbei wird ein Laserstrahl mit Hilfe eines Strahlteilers in zwei Strahlen aufgeteilt. Am Messpunkt kreuzen sich diese Strahlen wieder und es entsteht im Kreuzungsbereich ein Interferenzstreifenmuster. Ein Partikel, das sich zusammen mit dem Fluid durch das Streifenmuster bewegt, generiert in einem Photodetektor ein Streulichtsignal, dessen Frequenz proportional der Geschwindigkeitskomponente senkrecht zu den Interferenzstreifen ist. Das Prinzip der LDA zur Bestimmung von Geschwindigkeitsfeldern ist auch in GB 1 463 983 offenbart.

Ein laserbasiertes optisches Messverfahren, welches zur flächigen Strömungsanalyse dient, ist die "doppler global velocimetry" (DGV). Durch das Zusammenfügen mehrerer Messebenen können hier Volumenanalysen durchgeführt werden. Die DGV basiert darauf, dass ein Laser über ein optisches System ein Lichtband erzeugt, dass die partikelbehaftete Strömung beleuchtet. Durch den Dopplereffekt weist das von den Partikeln reflektierte Licht eine Frequenzverschiebung auf. Mit Hilfe einer Jodzelle wird die Frequenzverschiebung in eine Intensitätsverschiebung umgewandelt, die mit elektronischen Kameras detektiert und in ein Geschwindigkeitsfeld umgerechnet wird.

US 5 127 264 offenbart ein Verfahren zur Visualisierung von Luftströmungen, bei denen ein Tracer-Gas in den Luftstrom geführt und mittels einer Infrarotkamera beobachtet wird. Wird das Tracer-Gas in einzelnen Pulsen zugeführt, so ist durch eine Laufzeitbeobachtung auch eine Geschwindigkeitsbestimmung möglich.

Ein weiteres Verfahren zur Visualisierung von Strömungen mittels eines infrarot-aktiven Gases ist in US 5 200 621 beschrieben. Weitere bekannte Verfahren sind die Schlierenmesstechnik, Schlieren Image Velocimetry (SIV) oder Laser Induzierte Fluoreszenz (LIF).

Die im Stand der Technik bekannten Verfahren haben gemein, dass entweder Teilchen in den zu analysierenden Fluidstrom (Gasstrom) eingebracht werden müssen oder ein definierter Hintergrund oder eine bestimmte Messumgebung vorhanden sein muss. Die eingedüsten Teilchen werden selbst oder auf Grund ihrer Eigenschaften (Streuung, Fluoreszenz etc.) analysiert. Dies erfolgt üblicherweise mittels Lasern oder, wie bei der MRV, mit Tomographen. Sie sind somit nicht außerhalb eines Labors einsetzbar, benötigen ein definierten Hintergrund und/oder eine bestimmte Beleuchtung, wie bei der SchlierenMesstechnik oder benötigen die Eindüsung von sichtbaren Partikeln/Teilchen, welche die Messung verfälschen können.

Es besteht somit Bedarf an der Möglichkeit zur Darstellung von Geschwindigkeitsfeldern von Fluiden, insbesondere von Gasen oder Gasgemischen, welches die genannten Nachteile vermeidet. Das Verfahren sollte derart ausgestaltet sein, dass hierfür keine Laborbedingungen notwendig sind, dass heißt weder eine besondere Beleuchtung noch ein definierter Hintergrund sollte von Nöten sein. Weiterhin sollte das Messverfahren weitgehend unabhängig von der Messumgebung durchgeführt werden können. Zudem soll die Gasströmung nicht durch eingeführte Teilchen oder ähnliches beeinflusst werden. Überraschenderweise hat sich gezeigt, dass ein Verfahren in welchem mit Hilfe eines IR-aktiven Gases das Geschwindigkeitsfeld eines ersten Gases bestimmt wird dies ermöglicht.

Die der vorliegenden Erfindungen zugrundeliegenden Aufgabe wird daher gelöst durch ein Verfahren zur Bestimmung eines Geschwindigkeitsfeldes eines ersten strömenden Fluides in welchem das erste Fluid mit wenigstens einem hiervon verschiedenen zweiten, IR-aktiven Gas miteinander in Kontakt gebracht wird und mit wenigstens einer IR-Kamera mindestens zwei Aufnahmen in einem zeitlichen Abstand voneinander gemacht werden und die mit der wenigstens einen IR-Kamera aufgenommenen mindestens zwei Aufnahmen mittels PIV Algorithmen analysiert werden. Im Gegensatz zum Stand der Technik sind für das erfindungsgemäße Verfahren keine Laborbedingungen, also beispielsweise weder eine besondere Beleuchtung, noch ein definierter Hintergrund, notwendig. Beleuchtungsquellen oder Laserapparaturen, wie im Stand der Technik beschrieben, werden gerade nicht benötigt. Ebenso wenig ist eine Vorabmessung des Hintergrunds, also Messungen des ersten Fluides, bevor das IR-aktive Gas zugegeben wird, notwendig. Somit ist das erfindungsgemäße Verfahren im Wesentlichen unabhängig von der Messumgebung. Die Bestimmung von Geschwindigkeitsfeldern von Fluiden und insbesondere Gasen wird somit erstmals an annähernd beliebigen Orten ermöglicht. Außer der IR-Kamera und dem IR-aktiven Gas sind keine weiteren Hilfsmittel zur Durchführung der Aufnahmen notwendig. Auch können die Aufnahmen gemacht werden, ohne dass zuvor Vergleichsaufnahmen oder ähnliches zur Bestimmung des Hintergrundes notwendig sind.

Ein Geschwindigkeitsfeld ist ein physikalisches Feld, das jedem Ort im Raum eine Geschwindigkeit zuordnet. Die Geschwindigkeiten werden mit Hilfe von Vektoren dargestellt. Das Geschwindigkeitsfeld ist somit ein Vektorfeld, das heißt jedem Punkt des Raumes wird sowohl ein Geschwindigkeitsbetrag als auch eine Richtung zugewiesen. Das zu visualisierende Geschwindigkeitsfeld kann dies eines Fluides und insbesondere dies eines Gases oder eines Gasgemisches sein.

Fluid im Sinne der vorliegende Erfindung ist eine Substanz, die einer beliebig langsamen Scherung keinen Widerstand entgegensetzt. Insbesondere handelt es sich um eine Flüssigkeit oder ein Gas oder Gasgemisch, besonders bevorzugt ist das erste strömende Fluid ein Gas. Das erste Fluid kann erfindungsgemäß dabei nur ein Gas umfassen. Es ist jedoch auch möglich, dass das Fluid zwei oder mehr Gase umfasst, also ein Gemisch aus zwei oder mehreren Gasen darstellt. Insbesondere ist das erste Fluid Luft.

Um das Fluid mit einer IR-Kamera analysieren zu können weist das Fluid vorzugsweise eine von der Umgebungstemperatur verschiedene Temperatur auf; alternativ und ebenso bevorzugt ist die Konzentration des IR-aktiven Gases im Fluid verschieden von der Konzentration gegebenenfalls in der Messumgebung vorhandener IR-aktiver Gase. Dabei ist auch möglich, dass sowohl ein Temperaturunterschied als auch ein Konzentrationsunterschied an IR-aktivem Gas vorliegt.

Liegt ein Temperaturunterschied zwischen Fluid und Umgebung vor, ist der Kontrast der Aufnahme zwischen visualisierten Geschwindigkeitsfeld und der Umgebung umso höher, je höher der Temperaturunterschied ist. Ein ausreichender Kontrast ist notwendig, um die Aufnahmen zu analysieren und hieraus ein Geschwindigkeitsfeld berechnen zu können. Dabei ist es erfindungsgemäß möglich, dass das erste Fluid eine gegenüber der Umgebungstemperatur höhere Temperatur aufweist. Ebenso kann die Temperatur des ersten Fluides geringer als die Umgebungstemperatur sein. Die Temperaturdifferenz muss dabei so gewählt sein, dass sie größer ist als die Messunsicherheit der eingesetzten IR-Kamera.

Weisen das Fluid und die Umgebung die gleiche Temperatur auf, so ist eine Messung des Geschwindigkeitsfeldes dennoch möglich, wenn ein Konzentrationsunterschied an IR-aktivem Gas/IR-aktiven Gasen im Fluid in Bezug auf die Messumgebung vorliegt. Das heißt, dass entweder die Messumgebung im Wesentlichen frei von IR-aktiven Gasen ist, oder bei der Anwesenheit von IR-aktiven Gasen in der Messumgebung, die Konzentration an dem wenigstens einen IR-aktiven Gas so eingestellt wird, dass der Konzentrationsunterschied ausreichend ist, um mit Hilfe einer IR-Kamera einen ausreichenden Kontrast in einer Aufnahme zu erreichen, so dass auch so Geschwindigkeitsfeld des Fluides bestimmt werden kann. Dabei muss der Konzentrationsunterschied so gewählt werden, dass er größer ist als die Messunsicherheit der eingesetzten IR-Kamera.

Abgesehen davon ermöglicht das erfindungsgemäße Verfahren die Bestimmung von Geschwindingkeitsfeldern unabhängig von der Messumgebung. Die Auswahl einer geeigneten IR-Kamera liegt dabei im üblichen Aufgabengebiet eines Fachmanns.

Das erste Gas wird erfindungsgemäß mit einem vom ersten Gas verschiedenen zweiten Gas miteinander in Kontakt gebracht. Hierfür kann das zweite Gas in den Gasstrom des ersten Gases eingebracht werden. Dies kann beispielsweise dadurch erfolgen, dass das zweite Gas mittels einer Zuleitung bereits gasförmig in den Gasstrom des ersten Gases eingebracht wird. Darüber hinaus ist es aber auch möglich, dass das zweite Gas in einer anderen Aggregatform vorliegt und auf Grund der während der Messung vorherrschenden Temperatur zum Gas wird, welches dann zusammen mit dem ersten Gas strömt.

Das zweite Gas ist ein IR-aktives Gas, das heißt es kann mittels einer Kamera, welche im Infrarotbereich des Lichtes (Wellenlänge = 1mm bis 780nm) Bilder aufnimmt, analysiert werden.

Die Infrarotspektroskopie dient in der organischen Chemie der Ermittlung von Strukturelementen, funktionellen Gruppen und gegebenenfalls auch von Isomeren und Konformeren. Die Messung ist dabei auf die Schwingung des Moleküls zurückzuführen. Unter einer Schwindung versteht man die Bewegung der Massenträger relativ zum Schwerpunkt. Der Schwerpunkt selbst ändert die Lage nicht. Hauptsächlich kann zwischen Valenzschwingung und Deformationsschwingung unterschieden werden, wobei die Valenzschwindung weiterhin in symmetrische und antisymmetrische Schwingung und die Deformationsschwingung in Kipp-, Spreiz-, Torsions- und Pendelschwindung unterteilt werden kann. Im IR (Infrarot) Bereich sichtbare charakteristische Schwingungen sind beispielsweise solche von OH, NH und/oder CH Gruppen. Auch CC-Doppelbindungen oder CC-Dreifachbindung können mittels IR-Spektroskopie detektiert werden. Neben Kohlenstoff-Kohlenstoff-Bindungen sind auch CN-Dreifachbindungen, N=C=O (Cyanat), N=C=S (Thiocyanat), C=C=C (Allene), C=O oder C=N Schwingungen gut bobachtet werden. Ein IR-aktives Gas im Sinne der vorliegenden Erfindung ist daher ein Gas, welches in der IR-Spektroskopie wenigstens eine spezifische Bande aufweist. Das zweite Gas ist daher vorzugsweise ausgewählt aus der Gruppe, welche CO₂, O₃ (Ozon), N₂O, H₂O (gasförmig), Fluorkohlenwasserstoffe, SF₆, CO, HCN, NO, SO₂, Kohlenwasserstoffe sowie deren Mischungen umfasst. Bei den Kohlenwasserstoffen handelt es sich insbesondere um Kohlenwasserstoffe mit wenigstens einer oder mehreren Doppel und/oder Dreifach-Kohlenstoff-Kohlenstoff-Bindungen. Weiterhin bevorzugt als Kohlenwasserstoff ist Methan. Die genannten Gase weisen eine hohe IR-Aktivität auf. Sie können daher in geringen Konzentrationen mit einer geeigneten Kamera und Filter detektiert werden.

Diese IR-aktiven Gase können unmittelbar gasförmig in den Gasstrom des ersten Gases eingebracht werden. Es ist aber auch möglich das zweite Gas in einem anderen Aggregatzustand, beispielsweise als Flüssigkeit oder als Feststoff einzusetzen. Das zweite Gas kann dann als Flüssigkeit oder Feststoff in den Gasstrom des ersten Gases gebracht werden, wodurch das zweite Gas wieder gasförmig wird und so eine Gasstrom entsteht, der sowohl das erste als auch das zweite Gas umfasst. So kann beispielsweise das erste Gas über Trockeneis (festes CO₂) strömen, wodurch das entweichende gasförmige CO₂ in den Gasstrom des ersten Gases mit aufgenommen wird.

Der Gasstrom, der daraus entsteht, dass das erste strömende Gas mit dem zweiten IR-aktiven Gas miteinander in Kontakt gebracht wird, wird mit wenigstens einer IR-Kamera analysiert. Mit Hilfe der IR-Kamera werden wenigstens zwei Aufnahmen des Gasstroms gemacht. Diese zwei Aufnahmen werden in einem zeitlichen Abstand von einander aufgenommen. Der zeitliche Abstand, in welchem die wenigstens zwei Aufnahmen gemacht werden, beträgt dabei insbesondere 1 Sekunde oder weniger, insbesondere 0,5 Sekunden oder weniger, besonders bevorzugt 0,1 Sekunden oder weniger. Die IR-Kamera ist beispielsweise eine solche Kamera, welche in der Lage ist, mit einer Frequenz von 100 Hz oder mehr Bilder zu detektieren.

Dabei ist es möglich, je nach Art des IR-aktiven Gases, dessen Konzentration und der Spektralliniensensitivität der Kamera verschiedene Zonen bei der Auswertung zu Focus zieren:
- Entlang der optischen Achse integrierte Werte werden gemessen, wenn die optische Dicke entlang des Sichtpfades eher gering ist. Voraussetzung hierfür ist, dass die Kamera eine ausreichende Tiefenschärfe aufweist. Die optische Dicke entlang des Sichtpfades ist häufig dann geringer, wenn die Konzentration des zweiten Gases gering ist oder das zweite Gas im Spektralbereich der IR-Kamera einen geringen Emissionsgrad aufweist.

- In einem Bereich nahe der Schnittebene senkrecht zur optischen Achse wird gemessen, wenn die optische Dicke entlang des Sichtpfades gering ist das Kamerasystem eine geringe Tiefenschärfe hat. Hierbei erfolgt eine starke Fokussierung auf die Schnittebene.
- Weiterhin ist es möglich an der Außenseite der Gasströmung zu messen. Dies erfolgt dann, wenn die optische Dicke des mit dem zweiten Gas dotierten Gasstroms des ersten Gases hoch ist, also bei hohen Konzentrationen des zweiten Gases beziehungsweise bei hohen Emissionsgraden des zweiten Gases im Spektralbereich der IR-Kamera.

Die mit der wenigstens einen IR-Kamera aufgenommenen mindestens zwei Bilder können dann mittels bekannten PIV Algorithmen analysiert werden. Hieraus werden dann die Geschwindigkeitsfelder bestimmt vorzugsweise beträgt die Anzahl der Aufnahmen 100 oder mehr, insbesondere 500 oder mehr. Um eine Analyse durchführen zu können. Dabei ist es erfindungsgemäß auch möglich, dass die Aufnahmen wiederholt werden, so dass eine zeitliche Mittelung des Geschwindigkeitsfeldes dargestellt werden kann.

In einer bevorzugten Ausführungsform wird das strömende Gas nicht nur mit einer IR-Kamera beobachtet sondern mit wenigstens zwei oder mehreren IR-Kameras. Diese IR-Kameras befinden sich dann an räumlich voneinander getrennten Orten. Werden mit wenigstens zwei oder mehr IR-Kameras Aufnahmen gemacht, ist es möglich einen dreidimensionalen Eindruck des Geschwindigkeitsfeldes zu erhalten. Entsprechende notwendige Algorithmen zur Analyse sind bekannt. Daneben ist es auch möglich mittels geeigneter 3D-Kameras einen dreidimensionalen Eindruck zu erhalten.

Die wenigstens eine IR-Kamera weist bevorzugt einen Filter auf, der dem Spektralbereich des verwendeten zweiten IR-aktiven Gases angepasst ist. Hierdurch wird die Temperaturauflösung der Aufnahmen, welche mit der IR-Kamera gemacht werden, erhöht, wodurch eine genauere Darstellung des Geschwindigkeitsfeldes möglich ist.

Erfindungsgemäß ist es möglich, den Messbereich zu vergrößern. Dies ist insbesondere dann von Interesse, wenn der Temperaturunterschied, der zwischen dem zu detektierenden Gasstrom und der Umgebung gering ist. Hier kann durch eine Verlängerung der Belichtungszeit eine Verbesserung erreicht werden. Alternativ kann die Menge des zudosierten zweiten Gases variiert werden oder der Emissionsgrad in der IR-Kamera Einstellung angepasst werden, um den Messbereich zu erweitern.

Wird ein sehr heißer Gasstrom vor einem relativ kalten Hintergrund detektiert oder auch ein sehr kalter Gasstrom vor einem warmen Hintergrund, kann umgekehrt die Belichtungszeit der IR-Kamera verkürzt werden. Alternativ ist es natürlich auch hier möglich, die CO₂-Dosierung zu reduzieren oder einen anderen Emissionsgrad einzustellen.

Zur Auflösung von sehr schnellen Strukturen können zusätzliche Bilder mit kürzerer Belichtungszeit aufgenommen werden, um Unschärfen zu vermeiden. Da manche IR-Kameras sehr kurze Belichtungszeiten nicht zulassen ist auch eine Intensitätsmodulation zum Beispiel mit einer mechanisch rotierenden Sektor-blende (Pulsformat, Chopper) möglich.

Die vorliegende Erfindung unterscheidet sich damit vom Stand der Technik dadurch, dass ein Gasstrom mit Infrarotkameras (IR-Kameras) aufgenommen werden, nachdem das Gas mit einer IR-aktiven Substanz versetzt wurden. Nachträglich werden die erhaltenen Bilder mit bekannten Algorithmen prozessiert. Im Gegensatz hierzu ist es mit im Stand der Technik bekannten Verfahren nur möglich qualitative Informationen von Strömungen aus IR-Aufnahmen zu erhalten, jedoch keine quantitativen Werte für die Geschwindigkeit und die Geschwindigkeitsrichtung. Bei den weiteren bekannten Verfahren, wie beispielsweise PIV, müssen kleinste Teilchen in den zu analysierenden Gasstrom eingebracht werden, wodurch das Strömungsverhalten beeinflusst werden kann. Zudem ist ein solches Eindringen von Partikeln nicht immer möglich, da hierbei Räume oder Oberflächen, in oder an denen die Messung stattfindet, verunreinigt werden können. Bei der Messung unter Verwendung von flüssigen Teilchen kann es zudem zur Verdampfung der Teilchen kommen, was eine Auswertung im Folgenden unmöglich macht. Weiterhin müssen bei bekannten Verfahren häufig bestimmte Beleuchtungsquellen oder Laserapparaturen vorhanden sein. Demgegenüber ist für das erfindungsgemäße Verfahren lediglich eine IR-Kamera notwendig. Eine künstliche Beleuchtung wird hingegen nicht gebraucht. Ebenso erfolgt keine Verunreinigung der Umgebung durch eingegebene Partikel oder Tröpfchen.

Erfindungsgemäß ist es möglich, die Menge des zweiten Gases nach Bedarf einzustellen. Durch die Variation der zudosierten Gasmenge kann die Sensitivität der Messung kontrolliert werden. Durch die Variation der Belichtungszeit der IR-Kamera ist dies ebenfalls möglich.

Das erfindungsgemäße Verfahren kann allgemein in der Strömungstechnik eingesetzt werden. So ist beispielsweise am Solarturm Jülich die Strömungsrichtung vor dem Solar Receiver nicht bekannt. Die herkömmlichen Messtechnik sind entweder nicht auf einer ausreichend großen Skala anwendbar oder beeinflussen die Strömung am bestrahlten Solarturm. Auch in der Klimatisierungstechnik, in der Geschwindigkeitsfelder an Ausdrücken von Klima oder Belüftungsanlagen untersucht werden, ist das erfindungsgemäße Verfahren vorteilhaft, der hier keine Partikel eingesetzt werden müssen, die ansonsten in der Klimaanlage verbleiben würden.

Nicht nur an solarthermisches Kraftwerken, sondern auch in konventionellen Kraftwerken sind Geschwindigkeitsfelder zu analysieren. Beispielsweise bei Trockenkühltürmen auftretende Geschwindigkeitsfelder dienen der Analyse hinsichtlich der späteren Dimension dieser Kühltürme.

In einer weiteren Ausführungsform betrifft die vorliegende Erfindung die Verwendung eines IR-aktiven Gases zur Bestimmung eines Geschwindigkeitsfeldes eines strömenden Fluides, insbesondere eines Gasgemisches oder Gases, welches von dem IR-aktiven Gas verschieden ist. Hierfür werden das IR-aktive Gas und das strömende Gas miteinander in Kontakt gebracht. Das IR-aktive Gas ist insbesondere ausgewählt aus CO₂, O₃ (Ozon), N₂O, H₂O (gasförmig), Fluorkohlenwasserstoffe, SF₆, CO, HCN, NO, SO₂, Kohlenwasserstoffe, insbesondere solche Kohlenwasserstoffe mit wenigstens einer oder mehreren Doppel- und/oder Dreifach- Kohlenstoff-Kohlenstoff-Bindungen, Methan sowie Mischungen der genannten. Besonders bevorzugt ist das IR-aktive Gas CO₂. Das IR-aktive Gas kann sowohl als Gas als auch in einem anderen Aggregatzustand eingesetzt werden, solange es während der Messung als Gas vorliegt.

Im nachfolgenden Ausführungsbeispiel wird die vorliegende Erfindung beispielhaft erläutert.

### Ausführungsbeispiel:

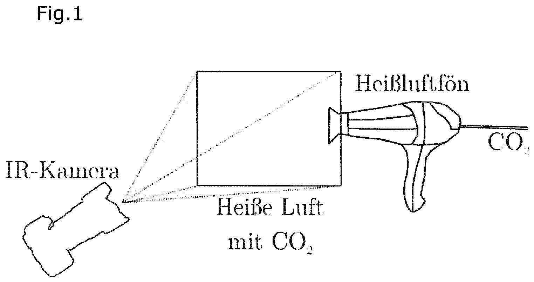

Ein Heißluftföhn wurde so präpariert, dass Umgebungsluft eingesaugt wurde. In diesen Luftstrom wurde CO₂ als IR-aktives Gas mittels eines Schlauches eingeleitet. In Fig. 1 ist schematisch ein entsprechender Aufbau gezeigt. Der so erhaltene, mit CO₂ versetzte Luftstrom wurde dann mit einer IR-Kamera unter Verwendung eines CO₂ Filters fotografiert. Ein entsprechender Aufbau ist in Fig. 1 gezeigt.

Mit einer 100 Hz IR-Kamera wurden 2000 Bilder aufgenommen. Diese wurden dann mittels PIV Algorithmen analysiert und so das Geschwindigkeitsfeld bestimmt.

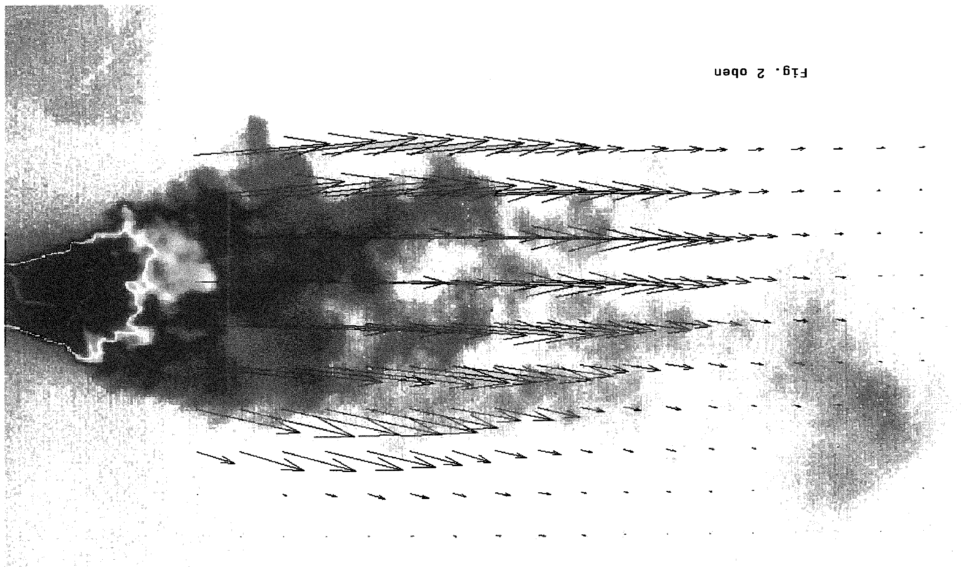

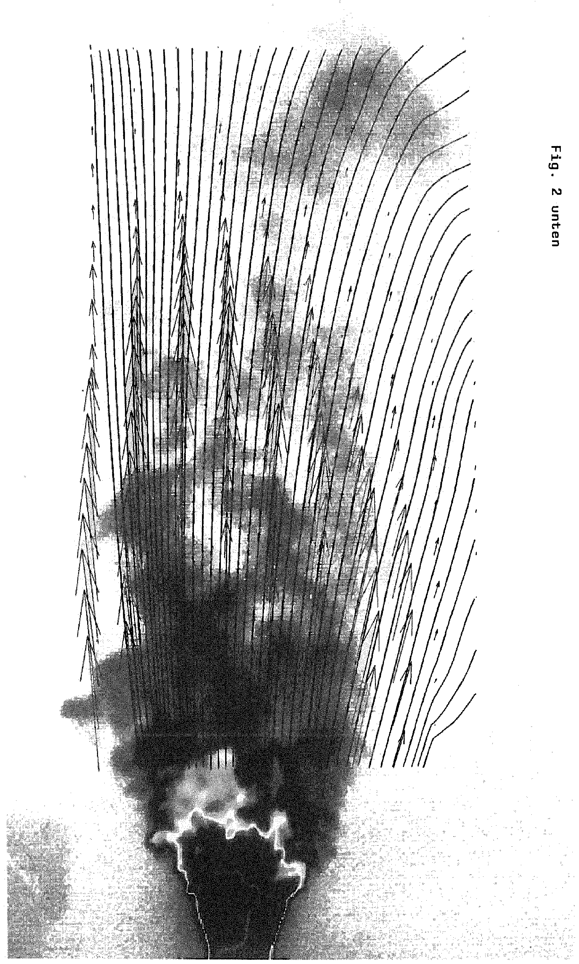

In Fig. 2 sind das errechnete Vektorfeld sowie die Stromlinien, welche sich ebenfalls aus der Messung berechnen lassen, dargestellt.

## Patentansprüche

1. Verfahren zur Bestimmung eines Geschwindigkeitsfeldes eines ersten strömenden Fluides in welchem
- das erste Fluid mit wenigstens einem hiervon verschiedenen zweiten, IR-aktiven Gas miteinander in Kontakt gebracht wird und
- mit wenigstens einer IR-Kamera mindestens zwei Aufnahmen in einem zeitlichen Abstand voneinander gemacht werden und
- die mit der wenigstens einen IR-Kamera aufgenommenen mindestens zwei Aufnahmen mittels PIV Algorithmen analysiert werden.

2. Verfahren nach Anspruch 1, **dadurch gekennzeichnet, dass** das erste Fluid ein Gas oder ein Gasgemisch und insbesondere Luft ist.

3. Verfahren nach Anspruch 1 oder 2, **dadurch gekennzeichnet, dass** das zweite Gas ausgewählt ist aus CO₂, O₃ (Ozon), N₂O, H₂O (gasförmig), Fluorkohlenwasserstoffe, SF₆, CO, HCN, NO, SO₂, Kohlenwasserstoffe, insbesondere Kohlenwasserstoffe mit wenigstens einer oder mehreren doppel und/oder dreifach Kohlenstoff-Kohlenstoff-Bindungen, Methan sowie Mischungen der genannten.

4. Verfahren nach einem der Ansprüche 1 bis 3, **dadurch gekennzeichnet, dass** die wenigstens zwei Aufnahmen in einem zeitlichen Abstand von 1 s oder weniger, insbesondere 0,5 s oder weniger, besonders 0,1 s oder weniger gemacht werden.

5. Verfahren nach einem der Ansprüche 1 bis 4, **dadurch gekennzeichnet, dass** mit wenigstens zwei oder mehr IR-Kameras Aufnahmen gemacht werden.

## Claims

1. A process for determining a velocity field of a first flowing fluid, in which
- said first fluid is contacted with at least one second IR-active gas, different therefrom; and
- at least two images are recorded by means of at least one IR camera with time intervals between the images; and
- said at least two images recorded by means of said at least one IR camera are analyzed by means of PIV algorithms.

2. The process according to claim 1, **characterized in that** said first fluid is a gas or mixture of gases, especially air.

3. The process according to claim 1 or 2, **characterized in that** said second gas is selected from CO₂, O₃ (ozone), N₂O, H₂O (gaseous), fluorohydrocarbons, SF₆, CO, HCN, NO, SO₂, hydrocarbons, especially hydrocarbons with at least one or more double and/or triple carbon-carbon bonds, methane, and mixtures of the above.

4. The process according to any of claims 1 to 3, **characterized in that** said at least two images are recorded with time intervals of 1 s or less, especially 0.5 s or less, in particular 0.1 s or less.

5. The process according to any of claims 1 to 4, **characterized in that** images are recorded by means of at least two or more IR cameras.

## Revendications

1. Procédé pour déterminer un champ de vitesse d'un premier fluide en écoulement, dans lequel
- le premier fluide est mis en contact avec au moins un second gaz IR-actif, différent du premier fluide, et
- au moins deux images sont enregistrées à intervalles au moyen d'au moins une caméra IR, et
- lesdites au moins deux images enregistrées au moyen de ladite au moins une caméra IR sont analysées au moyen d'algorithmes VIP.

2. Procédé selon la revendication 1, **caractérisé en ce que** le premier fluide est un gaz ou mélange de gaz, notamment de l'air.

3. Procédé selon la revendication 1 ou 2, **caractérisé en ce que** ledit second gaz est choisi parmi CO₂, O₃ (ozone), N₂O, H₂O (gazeux), hydrocarbures fluorés, SF₆, CO, HCN, NO, SO₂, hydrocarbures, notamment hydrocarbures avec au moins une ou plusieurs doubles et/ou triples liaisons carbone-carbone, méthane, et des mélanges de ceux-ci.

4. Procédé selon l'une quelconque des revendications 1 à 3, **caractérisé en ce que** lesdites au moins deux images sont enregistrées à des intervalles de 1 s ou moins, notamment 0,5 s ou moins, particulièrement 0,1 s ou moins.

5. Procédé selon l'une quelconque des revendications 1 à 4, **caractérisé en ce que** les images sont enregistrées au moyen d'au moins deux ou plusieurs caméras IR.
